## Europäisches Patentamt
## European Patent Office
## Office européen des brevets

(19)

(11) Veröffentlichungsnummer: **0 189 018**
**B1**

# EUROPÄISCHE PATENTSCHRIFT

(12)

(45) Veröffentlichungstag der Patentschrift:
05.10.88

(21) Anmeldenummer: 85890015.2

(22) Anmeldetag: 22.01.85

(51) Int. Cl.⁴: **B 23 Q 5/40**, B 23 Q 11/00

(54) **Fräsmaschine zum Bearbeiten von Kurbelwellen od. dgl.**

(43) Veröffentlichungstag der Anmeldung:
**30.07.86 Patentblatt 86/31**

(45) Bekanntmachung des Hinweises auf die Patenterteilung:
**05.10.88 Patentblatt 88/40**

(84) Benannte Vertragsstaaten:
**DE FR GB IT**

(56) Entgegenhaltungen:
EP - A - 0 142 592
DE - B - 2 559 824
FR - A - 2 267 848
GB - A - 582 037
GB - A - 2 045 138
GB - A - 2 094 930
US - A - 2 232 304
US - A - 3 387 517

(73) Patentinhaber: **GFM Gesellschaft für Fertigungstechnik und Maschinenbau Gesellschaft m.b.H.,
Ennserstrasse 14, A-4403 Steyr (AT)**

(72) Erfinder: **Blaimschein, Gottfried, Dipl. -Ing.,
Arnhalmweg 33, A-4407 Steyr (AT)**
Erfinder: **Kirchberger, Peter, Dipl. -Ing., Schulgasse 3,
A-3350 Haag (AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Fräsmaschine zum Bearbeiten von Kurbelwellen od. dgl., mit dem Vorschub für eine Rundbearbeitung zur Werkstückachse kon- oder exzentrischer Querschnitte entsprechend in einer Normalebene auf die Werkstückachse bewegbaren Fräseinheiten, die jeweils eine drehbare Werkzeugtrommel zur Aufnahme ringförmiger, innenschneidender Messerköpfe aufweisen.

Fräsmaschinen mit zwei oder mehreren Fräseinheiten und Ein- oder Mehrfachmesserköpfen als Fräswerkzeuge werden zur Massenfertigung von Kurbel- oder Nockenwellen u. dgl. eingesetzt und führen aufgrund der gleichzeitigen Bearbeitung mehrerer Querschnitte zu kurzen Bearbeitungszeiten. Diesen Fräseinheiten werden aber bisher jeweils eigene, die Vorschubbewegung aufbringende Frässchlitten zugeordnet, was eine unrationelle Maschinenkonzeption und Platzprobleme insbesondere hinsichtlich einer ausreichenden Werkstückabstützung mit sich bringt. Um diese maschinellen Bedingungen zu verbessern, wurde gemäss der älteren, nicht vorpublizierten europäischen Patentanmeldung EP-A-0 142 592 auch schon vorgeschlagen, wenigstens zwei, vorzugsweise aber alle Fräseinheiten auf einem gemeinsamen Frässchlitten anzuordnen, welcher die Fräseinheiten gegebenenfalls gegeneinander relativverstellbar aufnehmende Frässchlitten somit für die gesamte Vorschubbewegung der Fräseinheiten zu sorgen hat und daher vor allem die Steuerungs- und Antriebseinrichtungen vereinfacht. Allerdings ist ein spezieller Frässchlitten mit geeigneten Aufnahmen und gegebenenfalls den Verstelleinrichtungen für die Fräseinheiten erforderlich, welcher Schlitten bei der Bearbeitung von stillstehend gespannten Werkstücken sogar aus zwei in einer Normalebene auf die Werkstückachse verschiebbaren Teilschnitten zusammengesetzt sein muss. Diese Frässchlitten, seien es nun ein- oder mehrteilige Schlitten, verlangen demnach immer noch einen entsprechenden Konstruktions- und Herstellungsaufwand, erhöhen ausserdem die Vibrationsanfälligkeit und erschweren vor allem beim Einsatz mehrerer Fräseinheiten eine sichere, stabile Werkzeugabstützung.

Der Erfindung liegt daher die Aufgabe zugrunde, diese Mängel zu beseitigen und eine Fräsmaschine der eingangs geschilderten Art zu schaffen, die sich durch einen vergleichsweise einfachen und kompakten Aufbau sowie durch günstigste Steuerungs- und Antriebsverhältnisse auszeichnet.

Zur Lösung dieser Aufgabe sind die Fräseinheiten jeweils für sich verschiebbar gelagert und über einen gemeinsamen Antrieb jeweils für sich in Verschieberichtung vorschubgerecht bewegbar. Die Fräseinheiten können somit selbst die Funktion eines Schlittens übernehmen, wodurch der maschinelle Aufwand wunschgemäss verringert werden kann, und der gemeinsame Antrieb ermöglicht darüber hinaus die aufwandsarmen Steuerungs- und Antriebseinrichtungen.

Die Fräseinheiten können bei Bearbeitung von drehenden Werkstücken direkt in Führungen des Maschinenbettes oder eines Längsschlittens eingesetzt sein, sie lassen sich aber mit den zugehörigen Führungen und dem Antrieb zur Bearbeitung stillstehender Werkstücke auch auf einem gemeinsamen Frässchlitten anordnen. Dieser Frässchlitten braucht daher nicht mehr ein aus Teilschlitten zusammengesetzter Kreuzschlitten od. dgl. zu sein, sondern kann z. B. als einfacher Querschlitten mit der Höhe nach verschiebbar geführten Fräseinheiten ausgebildet werden, so dass eine einfache, robuste Maschinenkonzeption gewährleistet ist.

Eine zweckmässige Konstruktion ergibt sich, wenn der Antrieb für die Fräseinheiten ein Schraubgetriebe aufweist, das eine antreibbare Schraubspindel, vorzugsweise Kugelrollenspindel, und zwei jeweils einer oder mehreren zu einer Antriebsgruppe verbundenen Fräseinheiten zugeordnete Getriebemuttern umfasst. Das Schraubgetriebe ermöglicht einen exakten und gut steuerbaren Bewegungsablauf für den Antrieb der Fräseinheiten und erlaubt durch entsprechende Relativbewegungen zwischen den Getriebemuttern und der Schraubspindel eine gegenseitige Hubveränderung zwischen den Fräseinheiten, wobei je nach den zu bearbeitenden Querschnitten einzelne Fräseinheiten zu Antriebsgruppen zusammengefasst werden können, deren Antrieb gemeinsam von einer der Getriebemuttern abgeleitet wird.

Besitzen erfindungsgemäss die mit den Getriebemuttern zusammenwirkenden Gewindeabschnitte der Schraubspindel entgegengesetzte Steigungsrichtungen, werden bei Drehung der Schraubspindel die Fräseinheiten bzw. Antriebsgruppen gegengleich bewegt, so dass sich die Hubveränderung der Fräseinheiten ohne jede Nebenzeit erreichen lässt und einfach dem Steuerprogramm eingegeben wird. Die Fräseinheiten bzw. die Fräswerkzeuge arbeiten spiegelbildlich, es kommt zu entgegengesetzt gerichteten Einstichen, so dass beispielsweise bei entsprechend ausgerichteter Kurbelwelle alle Wangenseitenflächen gleichzeitig bearbeitet werden können. Dieses gegengleiche Arbeiten der Fräseinheiten führt zu gleichmässigen Schnittbedingungen für die Fräseinheiten und bringt minimale Fräszeiten mit sich, wobei allerdings die Relativbewegungen der Fräseinheiten während des Fräsens in Kauf zu nehmen sind.

Gemäss einer anderen Ausgestaltung der Erfindung können die mit den Getriebemuttern zusammenwirkenden Gewindeabschnitte der Schraubspindel gleiche Steigungsrichtungen besitzen, wobei eine der Getriebemuttern in der zugehörigen Fräseinheit oder Antriebsgruppe drehbar gelagert und mittels einer Bremse blockierbar ist. Hier bewegen sich die Getriebemuttern und damit auch die entsprechenden Fräseinheiten parallel zueinander, so dass eine eigene Hubeinstellung der Fräseinheiten notwendig ist. Dazu kann eine der Getriebemuttern durch Lösen einer Bremse freigegeben werden, so dass sich nur die andere in den zugehörigen Fräseinheiten drehfest sitzende Getriebemutter axial zur Spindel bewegt. Nach Erreichen des gewünschten Abstandes zwischen den Fräseinheiten wird die freigegebene Getriebemutter wieder blockiert und der konforme, vorschubgerechte Bewegungsvorgang kann für alle Fräseinheiten angesteuert werden.

Besteht die Bremse aus mit einem Bremsflansch der Getriebemutter zusammenwirkenden Bremsbacken, welche durch Bremsfedern belasteten Bremsbacken über Hydrauliktriebe lösbar sind, entsteht mit wenig Bauaufwand eine funktionssichere Einstellvorrichtung, da die Bremsbacken in der Grundstellung durch die Bremsfedern die Getriebemutter blockieren und nur das bestimmte Betätigen der Hydrauliktriebe die Bremse zur Hubeinstellung löst. Der Bremsflansch ergibt dabei eine zweckmässige Bremsfläche an der Getriebemutter.

Ist die die bremsbare Getriebemutter aufnehmende Fräseinheit oder Antriebsgruppe bei gelöster Bremse gegenüber der zugehörigen Führung lagefixierbar, kann der Hubeinstellvorgang beschleunigt und auch ganz exakt vorgenommen werden.

Günstig ist es weiter, wenn die Fräseinheiten bei blockierender Bremse untereinander verspannbar sind, da sich die Fräseinheiten dadurch gegenseitig abstützen können und Vibrationen vermieden werden.

In der Zeichnung ist der Erfindungsgegenstand rein schematisch dargestellt und zwar zeigen

Fig. 1 und 2 den Frässchlitten einer erfindungsgemässen Fräsmaschine in Stirnansicht und im Querschnitt nach der Linie II–II der Fig. 1;

Fig. 3 einen Arbeitsplan der Fräseinheiten dieses Frässchlittens;

Fig. 4 ein anderes Ausführungsbeispiel des Frässchlittens in Stirnansicht;

Fig. 5 ein Detail des Antriebes für die Fräseinheiten dieses Frässchlittens im Axialschnitt grösseren Massstabes, und

Fig. 6 einen den Fräseinheiten des Ausführungsbeispieles nach Fig. 4 zugehörenden Arbeitsplan.

Auf einem Maschinenbett 1 einer nicht weiter dargestellten Fräsmaschine sitzt in Querschienen 2 ein mittels eines Spindeltriebes 3 normal zur Achse des Werkstückes W verschiebbarer Frässchlitten 4, der werkstückseitig Führungen 5 zur Aufnahme dreier axial nebeneinander angeordneter Fräseinheiten 6a, 6b bildet. Die Fräseinheiten 6a, 6b sind mit Werkzeugtrommeln 7a, 7b ausgerüstet, die mittels der Übersichtlichkeit halber nicht dargestellter Antriebseinrichtungen drehbar sind und ringförmige, innenschneidende Messerköpfe 8a, 8b tragen. Den längs den Führungen 5 des Frässchlittens 4 verschiebbaren Fräseinheiten 6a, 6b ist ein gemeinsamer Antrieb 9 zugeordnet, so dass aufgrund dieses Antriebes 9 und des Spindeltriebes 3 für den Frässchlitten 4 die Fräseinheiten 6a, 6b mit ihren Messerköpfen 8a, 8b in einer Normalebene auf die Werkstückachse beliebig bewegbar sind und daher einem zur Rundbearbeitung von Hub- und Lagerzapfen des Werkstückes W erforderlichen Vorschub unterworfen werden können.

Der Antrieb 9 für die Fräseinheiten 6a, 6b weist eine antreibbare Kugelrollspindel 10 auf, die mit zwei Getriebemuttern 11a, 11b zusammenwirkt. Die eine Getriebemutter 11a sitzt dabei in der mittleren Fräseinheit 6a und die andere Getriebemutter 11b ist in einer die beiden äusseren Fräseinheiten 6b zu einer gemeinsamen Antriebsgruppe zusammenfassenden Brücke 12 gelagert, so dass entsprechend den beiden Getriebemuttern 11a, 11b mit dem Antrieb 9 sowohl die mittlere Fräseinheit 6a als auch die beiden äusseren Fräseinheiten 6b bewegt werden können. Zur besseren Führung der Fräseinheiten umgreift die Brücke 12 die mittlere Fräseinheit 6a auf der frässchlittenabgewandten Seite und bildet hier eine der Führung 5 des Frässchlittens 4 gegenüberliegende Zusatzführung 13, so dass die Fräseinheiten nicht nur am Frässchlitten 4, sondern auch gegenseitig abgestützt sind.

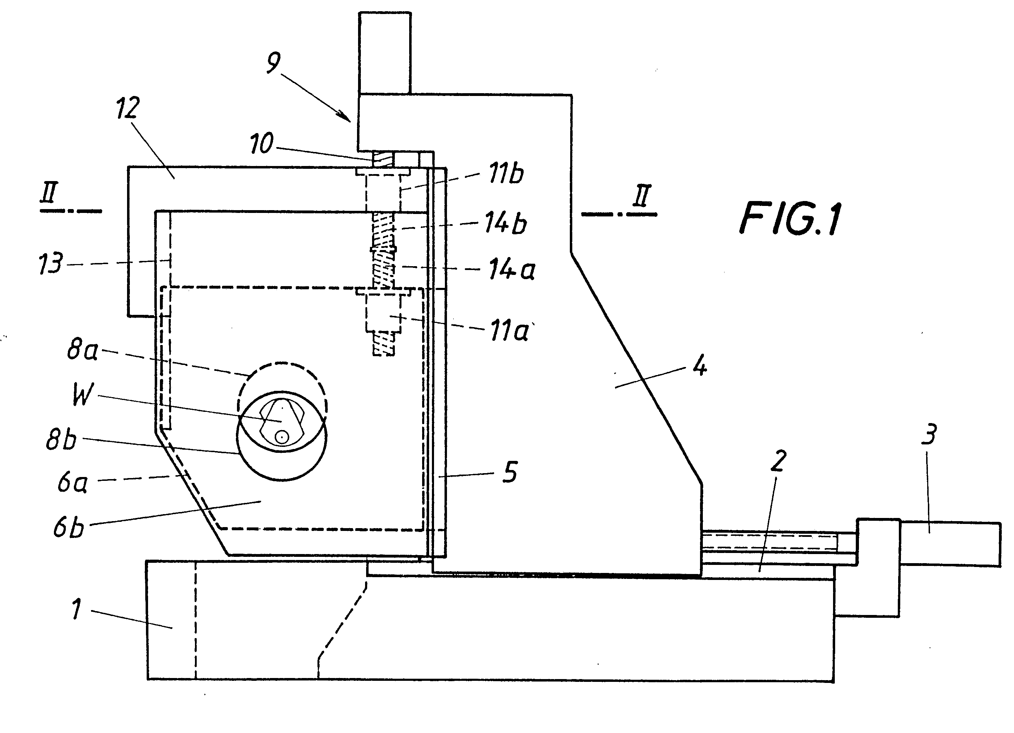

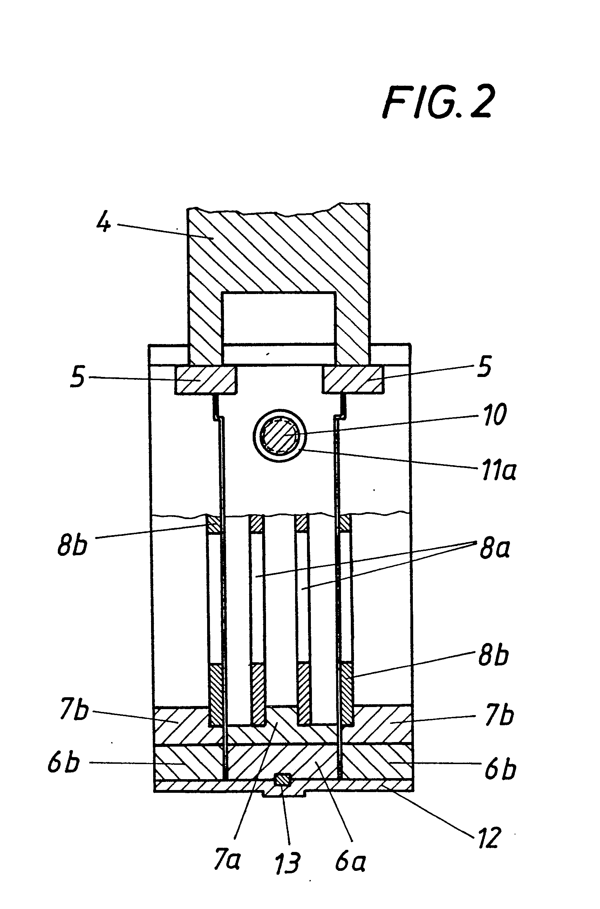

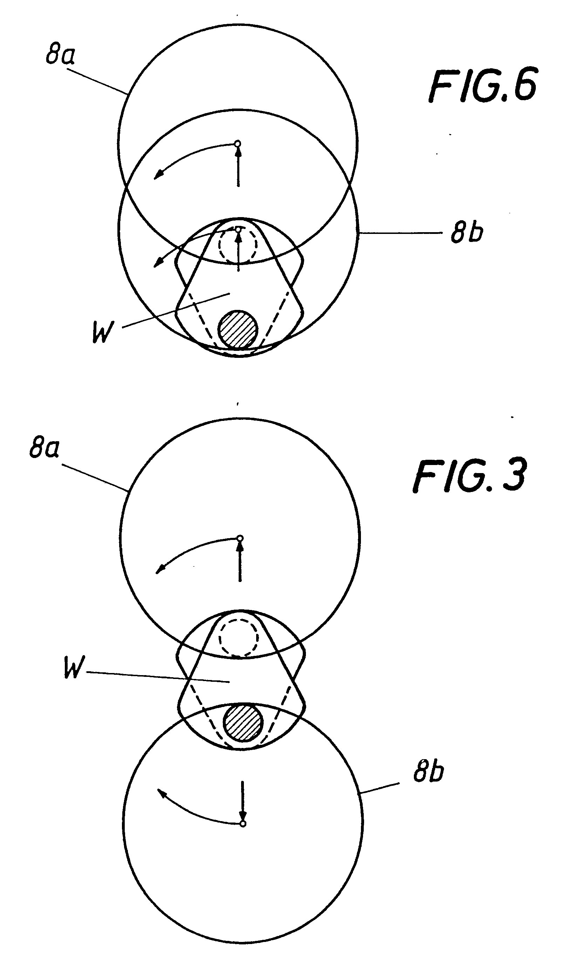

Gemäss dem Ausführungsbeispiel nach Fig. 1 bis 3 besitzt die Kugelrollspindel 10 für die beiden drehfest in der Fräseinheit 6a bzw. in der Brücke 12 gelagerten Getriebemuttern 11a, 11b zwei Gewindeabschnitte 14a, 14b entgegengesetzter Steigungsrichtung, wodurch eine Drehung der Spindel 10 eine gegengleiche Bewegung der Getriebemuttern und damit der mittleren Fräseinheit 6a einerseits und der beiden äusseren Fräseinheiten 6b anderseits hervorruft. Zur Bearbeitung von um 180° winkelversetzten und entsprechend der Verschieberichtung der Fräseinheiten ausgerichteten Hubzapfen können die Messerköpfe 8a, 8b unabhängig von der Hublage der Hubzapfen gegengleich einstechen und zur Zapfenbearbeitung ihren Rundvorschub gegengleich ausführen, so dass beispielsweise eine gleichzeitige Bearbeitung aller Hubzapfen und aller Wangenseitenflächen einer vierhübigen Kurbelwelle bei kürzesten Fräszeiten möglich ist (Fig. 3). Die Einstichbewegung wird dabei allein vom Antrieb 9 für die Fräseinheiten vorgenommen und die Bewegung für den Rundvorschub erfolgt durch eine entsprechende Koordinierung zwischen Antrieb 9 und Spindeltrieb 3 für den Frässchlitten 4, so dass der gewünschte Rundvorschub durch die Kombination der in den Verschieberichtungen liegenden Bewegungskomponenten entsteht.

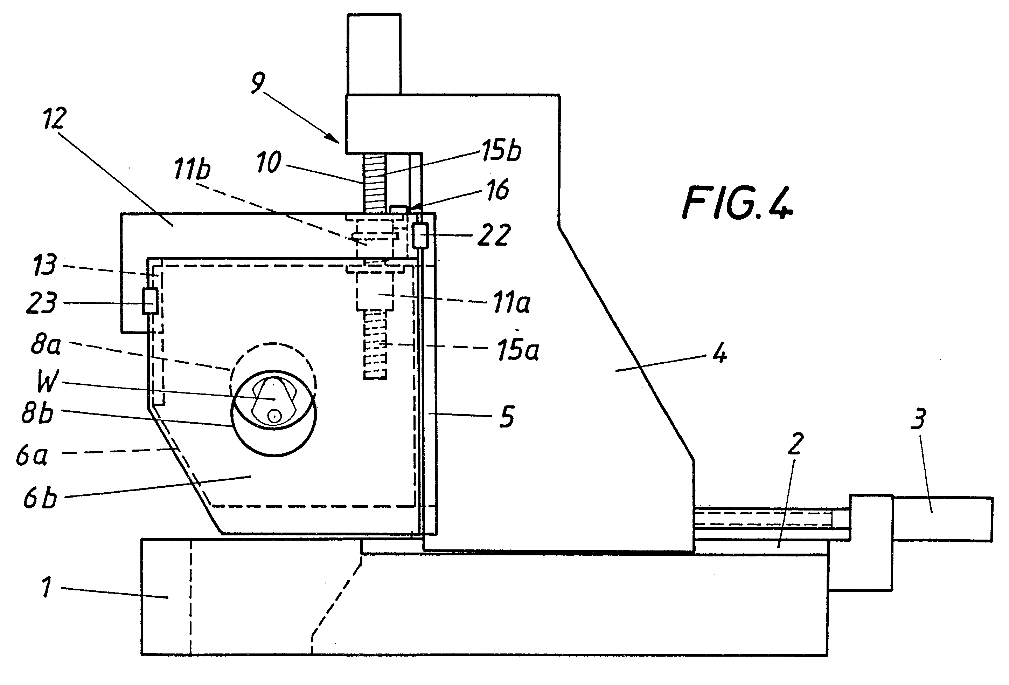

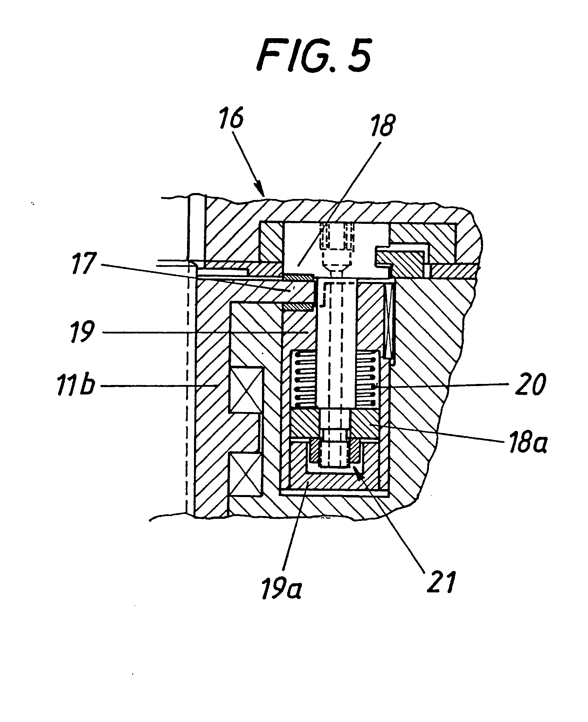

Beim Ausführungsbeispiel nach den Fig. 4 bis 6 weist die Kugelrollspindel 10 für die Getriebemuttern 11a, 11b Gewindeabschnitte 15a, 15b gleicher Steigungsrichtung auf, so dass bei Spindeldrehung die Getriebemuttern und damit die Fräseinheiten 6a, 6b gleichsinnig bewegt werden. Um hier die Fräseinheiten relativ zueinander verstellen und an Hubzapfen unterschiedlicher Hublagen anpassen zu können, ist die Getriebemutter 11b in der Brücke 12 drehbar gelagert und durch eine Bremse 16 blockierbar. Diese Bremse 16 weist zwei zwischen sich einen Bremsflansch 17 der Getriebemutter 11b aufnehmende Bremsbacken 18, 19 auf, die sich gegenseitig verschiebbar führen und durch Bremsfedern 20 im Bremssinn belastet sind. Ein den Bremsfedern 20 entgegenwirkender Hydrauliktrieb 21 der aus entsprechenden Kolben- und Zylinderteilen 18a, 19a der Bremsbacken 18, 19 gebildet ist, erlaubt durch Druckbeaufschlagung ein Lösen der Bremse. Ist die Bremse gelöst, kann die Getriebemutter 11b die Spindeldrehung mitmachen, so dass allein die Getriebemutter 11a axial bewegt wird und eine Relativverstellung zwischen der Fräseinheit 6a und der Brücke 12 bzw. den Fräseinheiten 6b erfolgt. Um diesen Verstellvorgang exakt durchzuführen, ist eine Klemmeinrichtung 22 vorgesehen, die die Fräseinheiten 6b am Frässchlitten 4 festklemmt. Sobald die Hubeinstellung vorgenommen ist, wird die Bremse 16 wieder aktiviert und die Klemmeinrichtung 22 geöffnet, so dass nun die Fräseinheiten 6a, 6b in der gegebenen Relativlage gleichsinnig einstechen und einem Rundvorschub unterworfen werden können (Fig. 6). Da hier die Fräseinheiten während des Fräsens keine Relativbewegung durchführen, können die Fräseinheiten 13a, 13b durch eine Spanneinrichtung 23 miteinander verspannt werden, was eine Stabilisierung der Werkzeugführung mit sich bringt.

## Patentansprüche

1. Fräsmaschine zum Bearbeiten von Kurbelwellen od. dgl., mit dem Vorschub für eine Rundbearbeitung zur Werkstückachse kon- oder exzentrischer Querschnitte entsprechend in einer Normalebene auf die Werkstückachse bewegbaren Fräseinheiten (6a, 6b), die jeweils eine drehbare Werkzeugtrommel (7a, 7b) zur Aufnahme ringförmiger, innenschneidender Messerköpfe (8a, 8b) aufweisen, wobei die Fräseinheiten (6a, 6b) jeweils für sich verschiebbar gelagert und über einen gemeinsamen Antrieb (9) jeweils für sich in Verschieberichtung vorschubgerecht bewegbar sind.

2. Fräsmaschine nach Anspruch 1, dadurch gekennzeichnet, dass die Fräseinheiten (6a, 6b) mit den zugehörigen Führungen (5) und dem Antrieb (9) auf einem gemeinsamen Frässchlitten (4) angeordnet sind.

3. Fräsmaschine nach Anspruch 1 oder 2, dadurch gekennzeichnet, dass der Antrieb (9) für die Fräseinheiten (6a, 6b) ein Schraubgetriebe aufweist, das eine antreibbare Schraubspindel, vorzugsweise Kugelrollspindel (10), und zwei jeweils einer oder mehreren zu einer Antriebsgruppe verbundenen Fräseinheiten (6a, 6b) zugeordnete Getriebemuttern (11a, 11b) umfasst.

4. Fräsmaschine nach Anspruch 3, dadurch gekennzeichnet, dass die mit den Getriebemuttern (11a, 11b) zusammenwirkenden Gewindeabschnitte (14a, 14b) der Schraubspindel (10) entgegengesetzte Steigungsrichtungen besitzen.

5. Fräsmaschine nach Anspruch 3, dadurch gekennzeichnet, dass die mit den Getriebemuttern (11a, 11b) zusammenwirkenden Gewindeabschnitte (15a, 15b) der Schraubspindel (10) gleiche Steigungsrichtungen besitzen, wobei eine der Getriebemuttern (11b) in der zugehörigen Fräseinheit oder Antriebsgruppe (9) drehbar gelagert und mittels einer Bremse (16) blockierbar ist.

6. Fräsmaschine nach Anspruch 5, dadurch gekennzeichnet, dass die Bremse (16) aus mit einem Bremsflansch (17) der Getriebemutter (11b) zusammenwirkenden Bremsbacken (18, 19) besteht, welche durch Bremsfedern (20) belasteten Bremsbacken (18, 19) über Hydrauliktriebe (21) lösbar sind.

7. Fräsmaschine nach Anspruch 5 oder 6, dadurch gekennzeichnet, dass die die bremsbare Getriebemutter (11b) aufnehmende Fräseinheit oder Antriebsgruppe (9) bei gelöster Bremse (16) gegenüber der zugehörigen Führung (5) lagefixierbar ist.

8. Fräsmaschine nach einem der Ansprüche 5 bis 7, dadurch gekennzeichnet, dass die Fräseinheiten (6a, 6b) bei blockierender Bremse (16) untereinander verspannbar sind.

## Claims

1. A milling machine for machining crankshafts or the like, comprising milling units (6a, 6b), which are movable in a plane that is normal to the axis of the workpiece for performing a feed movement for a circular machining of cross-sections which are concentric or eccentric to the axis of the workpiece, wherein each of said milling units comprises a rotatable tool drum (7a, 7b) for receiving internally cutting annular inserted-tooth cutters (8a, 8b), each of the milling units (6a, 6b) is individually displaceably mounted and the milling units are individually movable by a common drive (9) in the direction of the displacement as is required for the feed movement.

2. A milling machine according to claim 1, characterized in that the milling units (6a, 6b) together with the associated tracks (5) and the drive (9) are mounted on a common milling carriage (4).

3. A milling machine according to claim 1 or 2, characterized in that the drive (9) for the milling units (6a, 6b) comprises a power screw mechanism, which includes a driveable screw preferably consisting of a ball screw (10), and two nuts (11a, 11b), each of which is associated with one milling unit (6a, 6b) or a plurality of milling units (6a, 6b), which are connected to form a commonly driven group.

4. A milling machine according to claim 3, characterized in that those thread portions (14a, 14b) of the screw (10) which cooperate with the nuts (11a, 11b) are mutually oppositely handed.

5. A milling machine according to claim 3, characterized in that those thread portions (15a, 15b) of the screw (10) which cooperate with the nuts (11a, 11b) are handed in the same sense and one of the nuts (11b) is rotatably mounted in the associated milling unit or commonly driven group (9) and is adapted to be locked by a brake (16).

6. A milling machine according to claim 5, characterized in that the brake (16) consists of brake shoes (18, 19), which cooperate with a brake flange (17) of the nut (11b) and are biased by brake springs (20) and liftable by hydraulic actuators (21).

7. A milling machine according to claim 5 or 6, characterized in that the milling unit or commonly driven group (9) which accomodates the brakable nut (11b) is adapted to be fixed in position relative to the associated track (5) when the brake (16) has been lifted.

8. A milling machine according to any of claims 5 to 7, characterized in that the milling units (6a, 6b) are adapted to be forcibly locked to each other when the brake (16) is locked.

## Revendications

1. Fraiseuse pour l'usinage des vilebrequins ou équivalents, comprenant des unités de fraisage (6a, 6b) qui se rapprochent de l'axe de la pièce, dans un plan normal, selon l'avance nécessaire pour effectuer l'usinage circulaire des sections concentriques et excentriques par rapport à l'axe de la pièce, chacune des unités de fraisage comprenant un tambour porte-outil rotatif (7a, 7b) qui reçoit des têtes porte-lames annulaires à coupe intérieure (8a, 8b), les unités de fraisage (6a, 6b) étant guidées individuellement en translation et pouvant se déplacer individuellement dans la direction de la translation, d'une distance conforme à l'avance, sous l'action d'un mécanisme (9) d'entraînement commun.

2. Fraiseuse selon la revendication 1, caractérisée par le fait que les unités de fraisage (6a, 6b) sont montées avec leurs guides (5) respectifs et le mécanisme d'entraînement (9) sur un chariot de fraisage commun (4).

3. Fraiseuse selon l'une des revendications 1 et 2, caractérisée par le fait que le mécanisme (9) d'entraînement des unités de fraisage (6a, 6b) comprend une transmission à vis qui comprend une vis pouvant être entraînée, de préférence, une vis à billes (10) et deux écrous de transmission (11a, 11b) associés chacun à une ou plusieurs unités de fraisage (6a, 6b) qui sont réunis en un groupe d'entraînement.

4. Fraiseuse selon la revendication 3, caractérisée par le fait que les segments (14a, 14b) de la vis (10) qui coopèrent avec les écrous (11a, 11b) possèdent des pas de sens opposé.

5. Fraiseuse selon la revendication 3, caractérisée par le fait que les segments (15a, 15b) de la vis (10) qui coopèrent avec les écrous (11a, 11b) possèdent des pas de même sens, l'un des écrous (11b) étant tourillonné dans son unité de fraisage respective ou dans son groupe d'entraînement respectif et pouvant y être bloqué au moyen d'un frein (16).

6. Fraiseuse selon la revendication 5, caractérisée par le fait que le frein (16) est composé de mâchoires de frein (18, 19) qui coopèrent avec une collerette disque de frein (17) de l'écrou (11b) du mécanisme, lesdites mâchoires de frein (18, 19), qui sont chargées par des ressorts de frein (20), pouvant être écartées par des actionnements hydrauliques (21).

7. Fraiseuse selon l'une des revendications 5 ou 6, caractérisée par le fait que l'unité de fraisage ou le groupe d'entraînement (9), qui contient l'écrou de transmission freiné (11b), peut être bloqué en position par rapport à son guide (5) respectif lorsque le frein (16) est desserré.

8. Fraiseuse selon l'une des revendications 5 à 7, caractérisée par le fait que les unités de fraisage (6a, 6b) peuvent être rendues solidaires les unes des autres lorsque le frein (16) est en état de blocage.

FIG.1

0189018

# FIG.2

FIG.6

8a

8b

W

FIG.3

8a

W

8b

FIG.4

# FIG. 5